# EUROPEAN PATENT SPECIFICATION

(11) **EP 2 662 313 B1**
(45) Date of publication and mention of the grant of the patent: **10.02.2016**
(21) Application number: 13166203.3
(22) Date of filing: 02.05.2013
(51) Int. Cl.: B65D 85/804, A47J 31/06

(54) **A process for realising, using and managing a capsule for preparation of a beverage**
Verfahren zur Herstellung, Verwendung und Verwaltung einer Kapsel zur Zubereitung eines Getränks
Procédé de réalisation, d'utilisation et de gestion d'une capsule pour la préparation d'une boisson

(30) Priority: 09.05.2012 IT RE20120036
(43) Date of publication of application: 13.11.2013
(73) Proprietor: Coop Industria - Societa' Cooperativa, 40013 Castel Maggiore (Bologna) (IT)
(72) Inventor: Cesari, Tino, 44100 Ferrara (IT)
(74) Representative: Corradini, Corrado

(56) References cited:
- WO-A1-2011/080022
- AT-A1- 507 345
- DE-A1- 1 404 799
- FR-A1- 2 556 323
- GB-A- 2 478 732
- US-A1- 2011 027 426
- US-A1- 2012 070 543

## Description

The present invention relates to a process for realising, using and managing disposable capsules for the preparation of beverages such as coffee, tea or herbal infusions.

In particular, the present invention relates to single-use disposable capsules that contain a food substance, typically in a granular or powder form, which is suitable for making up the beverage for interaction, e.g. for infusion, solution or mixing, with a fluid such as water or steam.

It is known that a single-use disposable capsule of this type generally includes a cup-shaped container, closed at the bottom and open at the top, a batch of the food substance contained in the container, and a covering member suitable for closing the upper opening of the container, such as to retain the batch of food substance within the capsule.

In some embodiments, the container and the covering member are perforated, with holes small enough to retain the food substance within the capsule, but large enough to allow the passage of water and/or steam necessary for the preparation of the beverage.

In other embodiments, the container and the covering member are made of a material with that is both continuous and impermeable, so as to completely isolate the food substance from the external environment.

In both above-mentioned cases, the covering member can be in the form of a thin film which is fixed, for example by heat sealing or gluing, on a flange of the container delimiting the opening.

Starting from a single-use disposable capsule of this type, the preparation of the beverage is performed with the aid of a suitable dispensing machine which enables introduction of the hot water and/or steam inside the capsule, and then to extract the beverage obtained, leaving what remains of the food substance in the capsule.

In a case where the capsule is of a waterproof type, the dispensing machine is also predisposed such as to pierce both the covering member, so as to allow the introduction of hot water and/or steam, and the bottom of the cup-shaped container, so as to allow the beverage obtained to exit.

Once the preparation of the beverage has been completed, the disposable capsule is removed from the dispensing machine and then treated as refuse. In particular, since the disposable capsule comprises materials of different natures, among which the organic material of the remaining food substance and the plastic and/or metal material of the container and of the covering member, the used capsule is treated as a generic or undifferentiated refuse. This means that the capsules used are normally subjected to a process which provides for disposal by incineration or storage in landfill, preventing not only any possibility of recycling the materials used but also the possibility of subjecting each of the materials to the most appropriate and effective disposal processing, resulting in increased overall environmental impact due to the single-use disposable capsules.

Document WO 2011/080022 discloses a capsule for coffee which comprises a cup shaped container, the cup shaped container being provided on its internal surfaces with extraction grooves, the grooves having a width smaller than the average grain size of the product contained therein. The top and bottom of the container are closed by respective membranes, each of the membranes having a pull-tab for easy removal by the user. The top membrane can be removed after use for separation of the components of the exhausted capsule.

Document US 2011/027426 discloses a capsule for coffee having a cup shaped container, which is closed by a top film provided with a tab, the tab being adapted to be gripped by a user to remove the film before placing the capsule in the machine to brew coffee.

Document AT 507345 discloses a cup shaped container for coffee closed by a top cover. The top cover has a circular shape.

Documents DE 14 04 799, US 2012/070543 and FR 2 556 323 all disclose capsules for preparation of beverages such as coffee, whereby a top film and/or the bottom of the cup are perforated to allow the passage of water. Document GB 2 478 732 discloses a method and an apparatus for forming a multilayer moulded article, such as a coffee capsule. A coffee capsule is disclosed having a flange covered by a removable film, the flange having a circular shape provided with an enlargement in the form of a handle, the film covering the flange. The film is opened by piercing or cutting.

An aim of the present invention is therefore to provide a solution that enables a reduction of the environmental impact of disposable capsules for the preparation of beverages.

A further aim of the present invention is to achieve this objective in the context of a simple, rational and relatively inexpensive solution.

These and other objects are attained by the features of the various embodiments of the invention that are set out in the independent claims. The dependent claims outline preferred and/or particularly advantageous aspects of the various embodiments of the invention.

Thanks to the solution of claim 1 after use in the dispensing machine, the components of the disposable capsule, in this case the container, the covering member and the residual food substance, are advantageously separated from each other, enabling a differentiated waste disposal.

In particular, the organic material of the residual substance can be disposed of in a different way with respect to the container and to the covering member, which are generally made of inorganic material.

In turn, the container and the covering member can be disposed of in a different way, depending on the specific material of which each of them is made.

According to an aspect of the invention, the covering member is a film, which is fixed to a flange of the container that delimits the opening.

This aspect of the invention has the advantage of facilitating the removal of the covering member.

In a further aspect of the invention, the film can be a waterproof film.

In this way, preservation of the organoleptic qualities of the food substance contained in the capsule is advantageously preserved prior to use.

In other embodiments, the film may, however, be a perforated film.

The film preferably comprises at least a layer of a material selected from aluminium and a polymer substance.

These materials have the advantage of combining a high efficiency with a relatively low cost.

In a further aspect of the invention, the film comprises a flap that projects with respect to the flange.

Thanks to this solution, the projecting flap of film can be easily and comfortably grasped by a user to remove the film after use.

The flange has a circular shape while the film has an ovoid shape. Thanks to this particular shape of the flange and of the film, the capsule can be advantageously made with packaging machines of a conventional type and, subsequently, can be used with dispensing machines are also conventional, i.e. without causing any type of inconvenience in the operation of the machines. Moreover, thanks to this solution, the projecting flap of film is not very pronounced, thereby reducing the risk that a user might remove the film prior to use of the capsule.

In a further aspect of the invention, the film can be fixed to the flange of the container by heat sealing, and/or by an adhesive substance.

These solutions have the advantage of being quite reliable and economic, as well as enabling effective removal of the film after use.

In a further aspect of the invention, the removal of the film can be performed by a peeling action of the film from the container.

This solution has the advantage of being particularly simple and intuitive for the user, of not requiring the use of any type of auxiliary tool, and of minimizing the risk of scraps of film remaining attached to the container of the capsule.

In a further aspect of the invention the dispensing machine can also perform a piercing operation of the covering member, so as to enable introduction of the fluid inside the container.

This solution has the advantage of enabling use of a waterproof capsule suitable for isolating the food substance with respect to the external environment, until its actual use in the dispensing machine.

Preferably, the perforating of the covering member is performed by at least an internally hollow pin, an inner cavity of which is in communication with supply means of the fluid to be introduced into the container.

Thanks to this solution, the fluid is introduced directly inside the capsule so as to come into contact and wet only the food substance contained in it, thus ensuring the hygiene of the preparation.

According to a further aspect of the invention, the container of the capsule can be substantially cup-shaped.

This container shape has the advantage of allowing use of the capsule with dispensing machines of a substantially conventional type.

In a further aspect of the invention, the container can be an impermeable container.

This advantageously enhances preservation of the organoleptic qualities of the food substance contained in the capsule prior to use.

In other embodiments, the container could however be a perforated container.

The container preferably comprises at least a layer of material selected from aluminium and a polymer substance.

These materials have the advantage of combining a high efficiency with a relatively low cost.

In a further aspect of the invention the dispensing machine can also perform the operation of piercing the container, so as to enable extraction of the beverage.

This solution has the advantage of enabling use of a waterproof capsule suitable for isolating the food substance with respect to the external environment, up until actual use thereof in the dispensing machine.

The piercing of the container is preferably performed by at least an internally hollow point, an inner cavity of which is in communication with dispensing means of the beverage.

Thanks to this solution, the beverage is brought directly externally of the capsule so as to ensure the hygiene of the powder preparation.

In a further embodiment of the present invention, a capsule is provided for preparation of a beverage, which is particularly suited for use with the method described above, thus achieving the benefits thereof.

The capsule comprises a container, a substance contained in the container, and a covering member for closing an opening of the container, such as to retain the substance internally of the container, the substance being destined to obtain the beverage by interaction with a fluid, the covering member being removable from the container so as to enable free exit of the substance via the opening of the container.

In other words, the substance for making the beverage is retained inside the container only by the cover, so that following the removal of the covering member no element is present that is capable of retaining the substance physically inside the container.

In an aspect of the invention, the container and the covering member can define a single internal chamber, i.e. without any type of separating diaphragm to divide the volume, and the substance for the preparation of the beverage is freely contained in the internal chamber.

In this way, following the removal of the covering member, everything contained within the container is free to exit from its opening, allowing easy and rapid emptying of the container itself.

As previously mentioned, the covering member of the capsule can be a film, which is fixed to a flange of the container that delimits the opening. The film is preferably suitable for removing from the container by a peeling action. The film can be an impermeable film or a perforated film. The film may include at least a layer of a material selected from aluminium and a polymer substance. The film can further comprise a flap that projects with respect to the flange. In particular, the flange can exhibit a circular shape while the film can have an ovoid shape. The film can be fixed to the flange of the container by heat sealing and/or by means of an adhesive substance.

The container of the capsule can be shaped substantially cup-shaped. The container can be a waterproof container or perforated. The container preferably comprises at least a layer of material selected from aluminium and a polymer substance.

Further characteristics and advantages of the invention will emerge from a reading of the following description provided by way of non-limiting example, with the aid of the figures illustrated in the attached tables.
Figure 1 is a lateral view of a disposable capsule for preparation of a beverage according to an embodiment of the present invention.
Figure 2 is a plan view of the disposable capsule of figure 1.
Figure 3 is the detail III of figure 1 shown in section and in an enlarged view.
Figure 4 is an exploded elevation perspective view of an infusion group belonging to a dispensing machine that uses the disposable capsule of figure 1.
Figure 5 is a longitudinal section of the infusion assembly of figure 4 which receives the disposable capsule of figure 1.
Figures 6, 7 and 8 illustrate three steps to which the single-use deposable capsule of figure 1 is subjected.

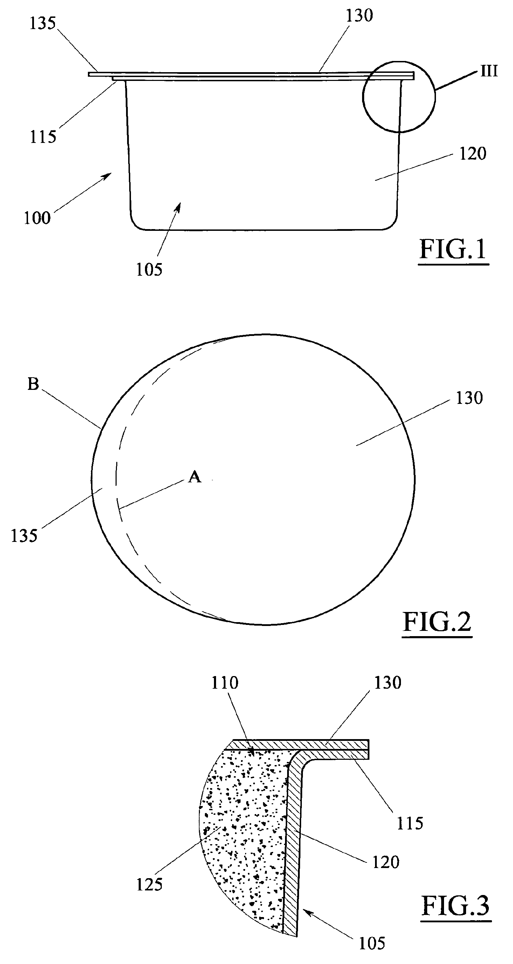

Figures 1 and 2 illustrate a single-use disposable capsule 100 for the preparation of a beverage, such as coffee, tea or herbal infusions.

The disposable capsule 100 comprises a substantially cup-shaped disposable container 105, which is laterally and inferiorly closed but provided with an opening 110 at its top.

The specific shape of the cup container 105 may be any, such as truncoconical as in the figures, or cylindrical, hemispherical or pyramidal. The opening 110 of the cup container 105 is delimited by a flat peripheral flange 115, which projects from the top of the lateral wall 120, beyond the cavity it delimits.

The peripheral flange 115 is preferably formed in a single body with the cup container 105.

The cup container 105 is made of a waterproof and continuous material, i.e. no perforations, so as to constitute an effective barrier against the passage of liquids, such as, for example, water, and preferably also against the passage of gases, such as steam, air, and in particular oxygen.

This material is also quite thin, so that the cup container 105 is generally deformable as a result of a not-excessively high pressure.

In this way, the perimeter flange 115 is also quite thin, in the order of a few tenths of a millimetre.

Preferably, the cup container 105 is made of polymer material, for example by means of a heat-forming process, but it can be realized using other materials, including, for example, metal materials and in particular aluminium. As illustrated in figure 3, the cup container 105 contains a batch 125 of a food substance, typically in the granular or powder form, which can make the beverage by interaction, for example by infusion, solution or mixing, with a fluid such as water and/or steam.

The amount of food substance that defines the batch 125 is generally measured so that one or two portions of the beverage can be made up, individually quantifiable for instance in a large cup or a small cup.

In the example shown, the batch of 125 comestible substance defines the entire contents of the disposable capsule 100, i.e. there are no other components that even partially occupy the internal volume of the cup container 105.

However, in other embodiments the internal volume of the cup container 105 might have composite contents, for example comprising several different food substances able to interact simultaneously with the water and/or steam to obtain the beverage.

The disposable capsule 100 further comprises a covering film 130, which is applied and fixed on the perimeter flange 115 of the cup container 105 so as to close the top opening 110, after the introduction of the batch 125 of comestible substance.

It is specified that this covering film 130 is the only element that physically retains the batch 125 of food substance, and more generally the entire contents of the disposable capsule 100, inside the cup container 105, preventing it from exiting through the opening 110.

In the illustrated example, the covering film 130 and the cup container 105 define a single inner chamber, i.e. without any dividing wall which would create a partition of the volume, and the batch 125 of comestible substance is freely contained in the interior of the inner chamber.

The covering film 130 is also made of a waterproof and continuous material, such as to constitute an effective barrier against the passage of liquids, such as water, and preferably also against the passage of gases, such as steam, air and in particular oxygen.

The covering film 130 is also quite thin, in the order of a few tenths of a millimetre.

The covering film 130 is preferably made of a metal material, for example aluminium, though it could be realized using other materials, including, for example polymer materials.

The covering film 130 is fixed on the perimeter flange 115 so as to hermetically seal the food substance with respect to the external environment.

The covering film 130 is preferably fixed on the perimeter flange 115 by heat-sealing, though it could be fixed by other means, including, for example by means of suitable adhesives.

In any case, the covering film 130 is fixed on the perimeter flange in a way that allows manual removal, e.g. by a peeling action.

In this regard, the covering film 130 is provided with a gripping flap 135 that protrudes laterally with respect to the perimeter flange 115, so that it can be grasped by a user to facilitate the peeling operation of the covering film 130.

For example, in the embodiment illustrated herein, the perimeter flange 115 has a perfectly circular shape in plan view, while the covering film 130 has an ovoid shape which completely closes the opening 110 but which extends beyond the dimensions of the perimeter flange 115, projecting with a tongued gripping flap 135.

In particular, as is visible in figure 2, the plan shape of the covering film 130 is geometrically obtained by the superposing of a circle A, having a diameter that is equal to the external diameter of the peripheral flange 115, and a semi-ellipse B that surrounds the circle A and is tangential thereto at two diametrically opposite points.

Thanks to this solution, the rounded shape and the smaller dimensions of the flap 135 do not complicate the realisation of the disposable capsule 100, which can advantageously be made with packaging machines of known type, and does not cause any drawbacks to the subsequent use of the disposable capsule 100 in the dispensing machine.

Moreover, thanks to this solution, the flap 135 is not very pronounced, thereby reducing the risk that a user might be induced to remove the covering film 130 before use of the disposable capsule 100.

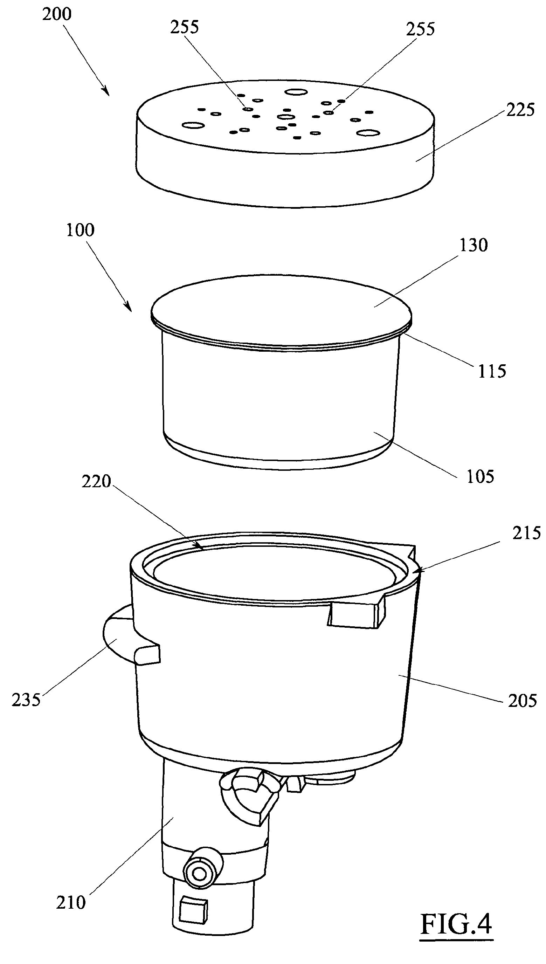

A disposable capsule 100 made according to the specifications described above is then used in a dispensing machine (shown only partially in figure 4) that actually prepares the beverage.

The dispensing machine comprises a boiler schematically dedicated to heating water, an infusion group 200 for accommodating the disposable capsule 100, and a pump to pump hot water from the boiler and feed it to inside the infusion assembly 200.

The pump and the boiler, as well as the casing of the dispensing machine, the hydraulic circuits and equipment accessories, are not illustrated and described in detail herein since they are widely known to the skilled person in the sector.

The infusion assembly 200 comprises a cup-shaped body 205 that can accommodate the disposable capsule 100, which body 205 has a dispensing spout of the beverage on the bottom 210 thereof.

The mouth of the cup-shaped body 205 is delimited by a flat flange 215, which exhibits a coaxial lowering 220 destined to substantially snugly receive the perimeter flange 115 of the capsule 100.

The depth of the lowering 220 is substantially equal to, or slightly smaller than, the sum of the thicknesses of the peripheral flange 115 and the covering film 130.

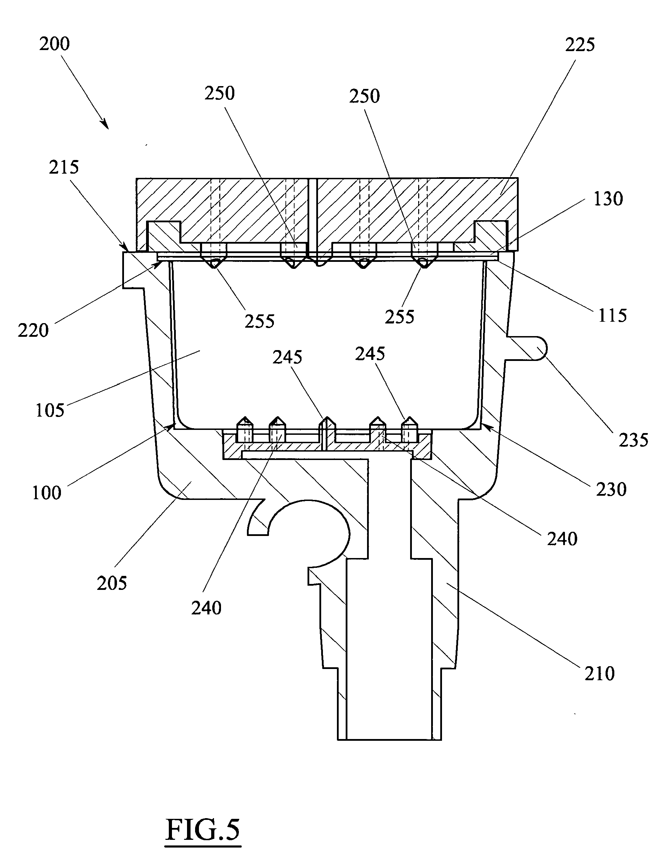

The infusion assembly 200 further comprises a cylindrical closing plate 225, which is destined to close the mouth of the cup-shaped body 205, by abutting against the flat flange 215, such as to define a closed infusion chamber 230 that encloses the disposable capsule 100 completely (see figure 5).

In the example shown here, the closing plate 225 is unremovably fixed to the dispensing machine, while the cup-shaped body 205 is detachable and attachable to the dispensing machine by means of a screw system 235 that enables the cup-shaped body 205 to be axially neared to the closing plate 225 which remains stationary, up to bringing the flat flange 215 into contact against the closing plate 225 itself.

Alternatively, the cup-shaped body 205 may be unremovably associated to the dispensing machine and be axially mobile thereon, between an open position and a closed position of the infusion chamber 230.

As illustrated in figure 5, the bottom of the cup-shaped body 205 comprises a plurality of pins 240, in this case having a conical tip, which are borne by a support plate that is accommodated in a cavity at the bottom of the cup-shaped body 205, and project towards the inside of the infusion chamber 230.

Each of the pins 240 has a central hole 245 which is located hydraulically in communication with the delivery spout 210 of the beverage.

Likewise, the closing plate 225 includes a plurality of pins 250, also having a conical tip, which protrude towards the inside of the infusion chamber 230. Each of these pins 250 has a central hole 255 which is located hydraulically in communication with the pump supplying the water.

The height of the pins 240 and 250, as well as the depth of the cup-shaped body 205, are chosen so that in use, when the flat flange 215 of the cup-shaped body 205 abuts on the closing plate 225, the pins 240 and 250 have pierced respectively the bottom of the cup container 105 and the covering film 130 of the disposable capsule 100, in such a way that the corresponding central holes 245 and 255 are in communication with the internal volume of the disposable capsule 100 itself (see figure 5).

At this point, the hot water is supplied from the boiler to the infusion chamber 230 through the central holes 255 of the pins 250, so that it mixes with the batch of 125 comestible substance contained in the disposable capsule 100, realising the beverage by infusion, dissolving or mixing.

At the same time, the beverage obtained progressively exits from the infusion chamber 230 through the central holes 245 of the pins 240, to be finally delivered through the delivery spout 210.

Once the preparation and dispensing of the beverage has concluded, the infusion chamber 230 is opened by a reciprocal distancing between the cup-shaped body 205 and the closing plate 225, and the disposable capsule 100, by now used up, is then removed from the dispensing machine.

After removal, the used disposable capsule 100 exhibits the cup container 105 and the covering film 130 still joined together, and a residue of the commestible substance still contained in the internal volume thereof.

At this point, the covering film 130 of the used disposable capsule 100 is manually removed from the cup container 105, in order to free the upper opening 110.

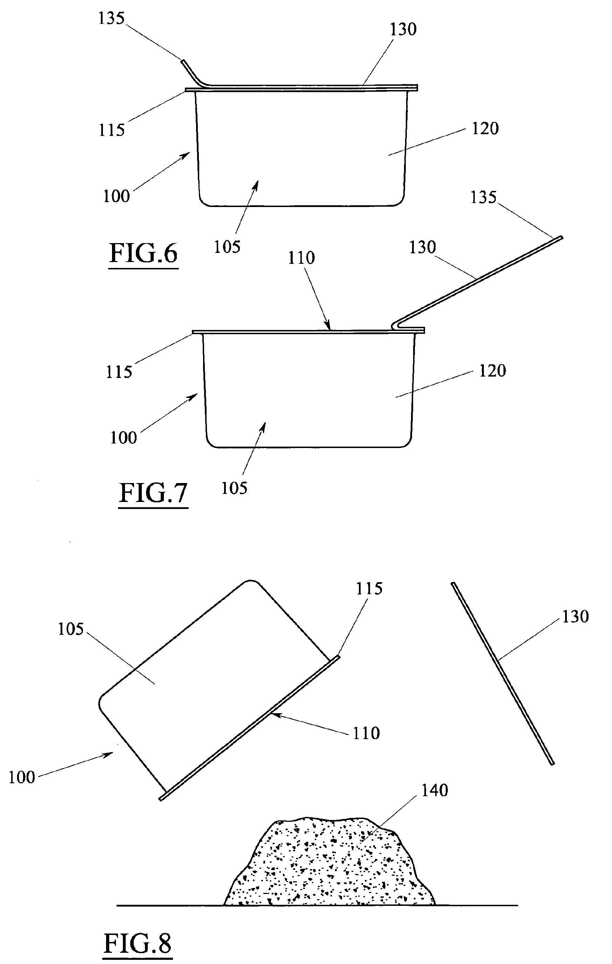

As shown in figures 6 and 7, the removal of the covering film 130 is performed by manually lifting the gripping flap 135 and then exerting, still manually, a peeling action of the covering film 130 with respect to the perimeter flange 115 of the cup container 105, preferably up to causing the total detachment of the covering film 130.

After the removal of the covering film 130, the cup container 105 is emptied of all of its contents (see figure 8), by discharging the entire residual food substance 140 through the upper opening 110.

In this way, after use in the dispensing machine, the components of the used disposable capsule 100, in this case the cup container 105, the covering film 130 and the remaining comestible substance 140, are advantageously separated from each other, such that they can be separately disposed of.

In particular, the residual organic material of the food substance 140 can be disposed of in a different way to the inorganic material of the cup container 105 and the covering film 130.

In turn, the cup container 105 and the covering film 130 may be disposed of in a different way, according to the specific material of which they are made.

More particularly, the residual substance 140 can be disposed of with a process for disposal of organic materials; the covering film 130 can be disposed of using a process for disposal of plastic materials, if made of a polymer substance, or with a disposal process for metals, if made of aluminium; and similarly the cup container 105 can be disposed of with a process for disposal of plastic materials, if made with a polymer substance, or with a disposal process for metal, if made of aluminium.

Obviously a person skilled in the art might make numerous modifications of a technical-applicational nature to the above-described, without thereby forsaking the scope of the embodiment of the invention as claimed.

In particular, although the description has related entirely to a disposable capsule 100 of a waterproof type, the above-described process can also be applied to already-perforated single-use disposable capsules such as the ones outlined in the preamble, i.e. in which the covering film 130 and/or the bottom of the cup container 105 are made already perforated.

## Claims

1. A process for realising, using and managing a capsule (100) for preparing a beverage, comprising steps of:
- realising a capsule (100) comprising a container (105), a substance (125) contained in the container (105) and a covering member (130) suitable for closing an opening (110) of the container (105), such as to retain the substance (125) internally of the container (105), wherein the covering member of the capsule (100) is a film (130), which is fixed to a flange (115) of the container (105) which flange (115) delimits the opening (110), wherein the film (130) comprises a flap (135) which projects with respect to the flange (115), and wherein the flange (115) exhibits a circular shape and the film (130) exhibits an ovoid shape, said ovoid shape being geometrically obtained by the superposing of a circle (A), having a diameter that is equal to the external diameter of the peripheral flange (115), and a semi-ellipse (B) that surrounds the circle (A) and is tangential thereto at two diametrically opposite points,
- using the capsule (100) in a dispensing machine which performs operations of:
- introducing a fluid internally of the container (105), such as to obtain a beverage following interaction of the fluid with the substance (125), and
- extracting the obtained beverage from the container, leaving the residual substance (140) internally thereof,
- removing the covering member (130) from the container (105), after the capsule (100) has been used in the dispensing machine, and
- emptying the container (105), by making the residual substance (140) exit through the opening (110) left open by the removal of the covering member (130).

2. The process of claim 1, wherein the film (130) is a waterproof film.

3. The process of any one of the preceding claims, wherein the removal of the film (130) is performed via a peeling action of the film with respect to the container (105).

4. The process of any one of the preceding claims, wherein the dispensing machine also performs the operation of perforating the covering member (130), such as to allow introduction of the fluid internally of the container (105).

5. The process of any one of the preceding claims, wherein the container (105) is a waterproof container.

6. The process of any one of the preceding claims, wherein the dispensing machine also performs the operation of perforating the container (105), such as to allow extraction of the beverage.

7. A capsule (100) for preparing a beverage, comprising a container (105), a substance (125) contained in the container (105), and a covering member (130) for closing an opening (110) of the container (105), such as to retain the substance (125) internally of the container (105), the substance (125) being destined to obtain the beverage by interaction with a fluid, the covering member (130) being removable from the container (105) so as to enable free exit of the substance via the opening (110) of the container (105) wherein the covering member of the capsule (100) is a film (130), which is fixed to a flange (115) of the container (105) which flange (115) delimits the opening (110), wherein the film (130) comprises a flap (135) which projects with respect to the flange (115), **characterised in that** the flange (115) exhibits a circular shape and the film (130) exhibits an ovoid shape, said ovoid shape being geometrically obtained by the superposing of a circle (A), having a diameter that is equal to the external diameter of the peripheral flange (115), and a semi-ellipse (B) that surrounds the circle (A) and is tangential thereto at two diametrically opposite points.

8. The capsule (100) of claim 7, wherein the container (105) and the covering member (130) delimit a single internal chamber, in which the substance (125) is freely contained.

9. The capsule (100) of claim 7 or 8, wherein the film (130) is suitable for removal by means of a peeling action of the film (130) from the container (105).

## Patentansprüche

1. Verfahren zum Umsetzen, Verwenden und Handhaben einer Kapsel (100) für die Zubereitung eines Getränks, folgende Schritte umfassend:
Umsetzen einer Kapsel (100), die einen Behälter (105), eine in dem Behälter (105) enthaltene Substanz (125) und ein Abdeckelement (130) umfasst, das zum Verschließen einer Öffnung (110) des Behälters (105) geeignet ist, so dass die Substanz (125) im Inneren des Behälters (105) gehalten wird, wobei das Abdeckelement der Kapsel (100) eine Folie (130) ist, die an einem Flansch (115) des Behälters (105) befestigt ist, wobei der Flansch (115) die Öffnung (110) begrenzt, wobei die Folie (130) eine Lasche (135) umfasst, die im Verhältnis zum Flansch (115) hervorsteht, und wobei der Flansch (115) eine runde Form und die Folie (130) eine Eiform aufweist, wobei die Eiform geometrisch erzielt wird, indem ein Kreis (A) darüber geblendet wird, der einen Durchmesser aufweist, der gleich dem Außendurchmesser des umlaufenden Flansches (115) ist, und eine Halbellipse (B), die den Kreis (A) umschließt und an zwei entgegengesetzten Punkten tangential zu diesem liegt,
Verwenden der Kapsel (100) in einem Ausgabeautomaten, der folgende Vorgänge ausführt:
Einführen eines Fluids in das Innere des Behälters (105) derart, dass aus dem Zusammenwirken des Fluids und der Substanz (125) ein Getränk erzielt wird, und
Entnehmen des gewonnenen Getränks aus dem Behälter, wobei die restliche Substanz (140) in seinem Inneren zurückbleibt,
Entfernen des Abdeckelements (130) vom Behälter (105), nachdem die Kapsel (100) im Ausgabeautomaten verwendet wurde, und
Leeren des Behälters (105), indem die restliche Substanz (140) dazu gebracht wird, durch die Öffnung (110) auszutreten, die durch das Entfernen des Abdeckelements (130) offen gelassen wurde.

2. Verfahren nach Anspruch 1, wobei die Folie (130) eine wasserfeste Folie ist.

3. Verfahren nach einem der vorhergehenden Ansprüche, wobei das Entfernen der Folie (130) mittels einer Abziehmaßnahme der Folie im Verhältnis zum Behälter (105) ausgeführt wird.

4. Verfahren nach einem der vorhergehenden Ansprüche, wobei der Ausgabeautomat außerdem den Vorgang des Perforierens des Abdeckelements (130) derart ausführt, dass das Einführen des Fluids in das Innere des Behälters (105) ermöglicht wird.

5. Verfahren nach einem der vorhergehenden Ansprüche, wobei der Behälter (105) ein wasserfester Behälter ist.

6. Verfahren nach einem der vorhergehenden Ansprüche, wobei der Ausgabeautomat außerdem den Vorgang des Perforierens des Behälters (105) derart ausführt, dass das Entnehmen des Getränks ermöglicht wird.

7. Kapsel (100) für die Zubereitung eines Getränks, die einen Behälter (105), eine in dem Behälter (105) enthaltene Substanz (125) und ein Abdeckelement (130) zum Verschließen einer Öffnung (110) des Behälters (105) umfasst, so dass die Substanz (125) im Inneren des Behälters (105) gehalten wird, wobei die Substanz (125) dafür vorgesehen ist, durch Zusammenwirken mit einem Fluid das Getränk zu erzielen, wobei das Abdeckelement(130) derart vom Behälter (105) abnehmbar ist, dass das freie Austreten der Substanz über die Öffnung (110) des Behälters (105) ermöglicht wird, wobei das Abdeckelement der Kapsel (100) eine Folie (130) ist, die an einem Flansch (115) des Behälters (105) befestigt ist, wobei der Flansch (115) die Öffnung (110) begrenzt, wobei die Folie (130) eine Lasche (135) umfasst, die im Verhältnis zum Flansch (115) hervorsteht, **dadurch gekennzeichnet, dass** der Flansch (115) eine runde Form und die Folie eine Eiform aufweist, wobei die Eiform geometrisch erzielt wird, indem ein Kreis (A) darüber geblendet wird, der einen Durchmesser aufweist, der gleich dem Außendurchmesser des umlaufenden Flansches (115) ist, und eine Halbellipse (B), die den Kreis (A) umschließt und an zwei entgegengesetzten Punkten tangential zu diesem liegt,

8. Kapsel (100) nach Anspruch 7, wobei der Behälter (105) und das Abdeckelement (130) eine einzelne innere Kammer begrenzen, in der die Substanz (125) frei enthalten ist.

9. Kapsel (100) nach Anspruch 7 oder 8, wobei die Folie (130) geeignet ist, mittels einer Abziehmaßnahme der Folie (130) vom Behälter (105) entfernt zu werden.

## Revendications

1. Processus de réalisation, d'utilisation et de gestion d'une capsule (100) pour préparer une boisson, comprenant les étapes suivantes :
- réalisation d'une capsule (100) comprenant un récipient (105), une substance (125) contenue dans le récipient (105) et un élément de recouvrement (130) adapté pour fermer une ouverture (110) du récipient (105) de manière à retenir la substance (125) à l'intérieur du récipient (105), dans lequel l'élément de recouvrement de la capsule (100) est un film (130) qui est fixé à une bride (115) du récipient (105) dont la bride (115) délimite l'ouverture (110), dans lequel le film (130) comprend un rabat (135) qui dépasse par rapport à la bride (115), et dans lequel la bride (115) présente une forme circulaire et le film (130) présente une forme ovoïde, ladite forme ovoïde étant obtenue géométriquement en superposant un cercle (A), dont le diamètre est égal au diamètre externe de la bride périphérique (115), et une semi-ellipse (B) qui entoure le cercle (A) et est tangentielle à celui-ci en deux points diamétralement opposés,
- utilisation de la capsule (100) dans un distributeur qui met en oeuvre les opérations suivantes :
- introduction d'un fluide à l'intérieur du récipient (105), de manière à obtenir une boisson suite à l'interaction du fluide avec la substance (125), et
- extraction de la boisson obtenue du récipient, en laissant la substance résiduelle (140) à l'intérieur de celui-ci,
- enlèvement de l'élément de recouvrement (130) du récipient (105), après que la capsule (100) a été utilisée dans le distributeur, et
- vidange du récipient (105) en faisant sortir la substance résiduelle (140) à travers l'ouverture (110) laissée ouverte par l'enlèvement de l'élément de recouvrement (130).

2. Processus selon la revendication 1, dans lequel le film (130) est un film étanche à l'eau.

3. Processus selon l'une quelconque des revendications précédentes, dans lequel l'enlèvement du film (130) est effectué par une action de pelage du film par rapport au récipient (105).

4. Processus selon l'une quelconque des revendications précédentes, dans lequel le distributeur met aussi en oeuvre l'opération de perforation de l'élément de recouvrement (130), de manière à permettre l'introduction du fluide à l'intérieur du récipient (105).

5. Processus selon l'une quelconque des revendications précédentes, dans lequel le récipient (105) est un récipient étanche à l'eau.

6. Processus selon l'une quelconque des revendications précédentes, dans lequel le distributeur met aussi en oeuvre l'opération de perforation du récipient (105), de manière à permettre l'extraction de la boisson.

7. Capsule (100) de préparation d'une boisson, comprenant un récipient (105), une substance (125) contenue dans le récipient (105) et un élément de recouvrement (130) pour fermer une ouverture (110) du récipient (105), de manière à retenir la substance (125) à l'intérieur du récipient (105), la substance (125) étant destinée à obtenir la boisson par interaction avec un fluide, l'élément de recouvrement (130) pouvant être enlevé du récipient (105) de manière à permettre la sortie libre de la substance via l'ouverture (110) du récipient (105), dans laquelle l'élément de recouvrement de la capsule (100) est un film (130), qui est fixé à une bride (115) du récipient (105) dont la bride (115) délimite l'ouverture (110), dans laquelle le film (130) comprend un rabat (135) qui dépasse par rapport à la bride (115), **caractérisée en ce que** la bride (115) présente une forme circulaire et le film (130) présente une forme ovoïde, ladite forme ovoïde étant obtenue géométriquement par la superposition d'un cercle (A), présentant un diamètre qui est égal au diamètre externe de la bride périphérique (115), et d'une semi-ellipse (B) qui entoure le cercle (A) et est tangentielle à celui-ci en deux points diamétralement opposés.

8. Capsule (100) selon la revendication 7, dans laquelle le récipient (105) et l'élément de recouvrement (130) délimitent une chambre interne unique dans laquelle la substance (125) est contenue librement.

9. Capsule (100) selon la revendication 7 ou 8, dans laquelle le film (130) est adapté pour être enlevé du récipient (105) par une action de pelage du film (130).
